(19) **Europäisches Patentamt / European Patent Office / Office européen des brevets**

(11) **EP 3 726 483 A1**

(12) # EUROPEAN PATENT APPLICATION
published in accordance with Art. 153(4) EPC

(43) Date of publication:
**21.10.2020 Bulletin 2020/43**

(21) Application number: **18889196.4**

(22) Date of filing: **12.12.2018**

(51) Int Cl.:
**G07C 5/08** (2006.01)

(86) International application number:
**PCT/CN2018/120639**

(87) International publication number:
**WO 2019/114759 (20.06.2019 Gazette 2019/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.12.2017 CN 201711345294
28.02.2018 CN 201810168454**

(71) Applicant: **Nio Nextev Limited
Hong Kong (CN)**

(72) Inventors:
• **DONG, Yiwei
  Hong Kong (CN)**
• **LIU, Yang
  Hong Kong (CN)**

(74) Representative: **Barker Brettell LLP
100 Hagley Road
Edgbaston
Birmingham B16 8QQ (GB)**

(54) **METHOD AND DEVICE FOR ASSESSING VEHICLE USE CONDITION OF USER**

(57) Provided are a method and apparatus for assessing a vehicle usage status of a user, and a computer storage medium for implementing the method, the method comprising the steps of: determining values of one or more dimensions for a vehicle usage status of a user according to a vehicle usage history of the user; and obtaining, based on the values of the dimensions, an assessed value reflecting the vehicle usage status of the user.

Fig. 1

**Description**

Technical Field

The invention relates to automobile electronics technologies, and in particular to a method and apparatus for assessing a vehicle usage status of a user, and a computer storage medium for implementing the method.

Background Art

The invention of automobiles has greatly expanded the space of human activities. In modern society, vehicles have become necessities in daily life. They are not only transportation means, but also intimate partners. With the rapid development of electric vehicles, this trend is becoming increasingly apparent.

Automobile manufacturers and service providers always expect that vehicles can be better cared by users, onboard apparatuses can be more fully used by the users, and the users can have a perfect and wonderful use experience for the vehicles. The realization of the objectives above depends on an accurate understanding of a vehicle usage status of the user. However, this has not been recognized in the industry up to now. In view of this, there is an urgent need to provide a method and apparatus for accurately assessing a vehicle usage status of a user.

Summary of the Invention

An objective of the invention is to provide a method for assessing a vehicle usage status of a user, which provides an accurate understanding of the vehicle usage status of the user.

The method for assessing a vehicle usage status of a user according to one aspect of the invention comprises the steps of:

determining values of one or more dimensions for a vehicle usage status of a user according to a vehicle usage history of the user; and
obtaining, based on the values of the dimensions, an assessed value reflecting the vehicle usage status of the user.

Preferably, in the method above, the dimensions comprise one or more of: health care, use time, driving performance, familiarity, and interaction frequency.

Preferably, in the method above, the value of the health care dimension is determined based on a maintenance record, a repair record, and a fault record of the vehicle.

Preferably, in the method above, the value of the use time dimension is determined based on a total traveling mileage and a daily traveling mileage of the vehicle and the number of times that the vehicle is used every week.

Preferably, in the method above, the value of the driving performance dimension is determined based on a driving stationarity indicator and an energy consumption indicator of the vehicle per unit traveling mileage.

Preferably, in the method above, the value of the familiarity dimension is determined based on the frequency of operating of an onboard device by the user per unit traveling mileage.

Preferably, in the method above, the value of the interaction frequency dimension is determined based on the number of times that a user wakes up an onboard voice assistant per unit traveling mileage.

Preferably, in the method above, the assessed value is a weighted sum of the values of the various dimensions.

Preferably, the method further comprises the steps of:

generating a vehicle usage advice associated with the user based on the assessed value; and
providing the generated vehicle usage advice to the user.

An apparatus for assessing a vehicle usage status of a user according to another aspect of the invention comprises a memory, a processor, and a computer program stored on the memory and executable on the processor, wherein the program is executed to implement the method as described above.

A computer-readable storage medium according to a further aspect of the invention has a computer program stored thereon, wherein the program implements, when executed by a processor, the method as described above.

According to the aspects of the invention, a usage status is divided into multiple dimensions, historical records of the usage of a vehicle by a user are used to determine values of the dimensions, and the values are summarized to obtain an assessed value accurately reflecting the vehicle usage status of the user, so that highly targeted and valuable usage advices can be provided to the user, thereby improving user experience and reducing vehicle usage costs.

Brief Description of the Drawings

The above-mentioned and/or other aspects and advantages of the invention will be clearer and more comprehensible from the following description of various aspects in conjunction with the accompanying drawings, and the same or similar units in the accompanying drawings are represented by the same numerals. In the accompanying drawings:

FIG. 1 is a flowchart of a method for assessing a vehicle usage status of a user according to one embodiment of the invention.
FIG. 2 is a schematic block diagram of an apparatus for assessing a vehicle usage status of a user according to a further embodiment of the invention.

Detailed Description of Embodiments

The invention is described below more comprehensively with reference to the accompanying drawings showing schematic embodiments of the invention. However, the invention may be implemented in different forms but should not be construed as being only limited to the embodiments herein. The embodiments provided above are intended to make the disclosure of this specification comprehensive and complete, so as to convey the scope of protection of the invention to a person skilled in the art more comprehensively.

In this specification, the terms such as "comprise" and "include" indicate that in addition to the units and steps that are directly and clearly described in the specification and claims, other units and steps that are not directly or clearly described are not excluded in the technical solutions of the invention.

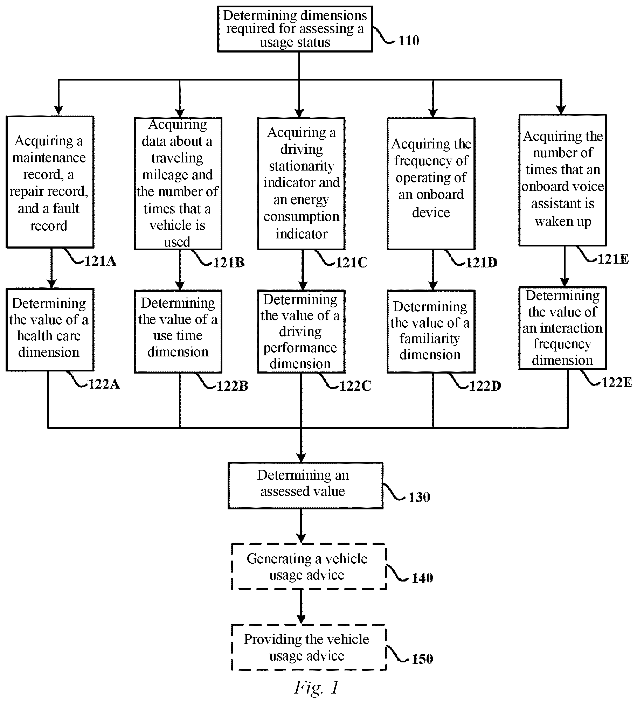

FIG. 1 is a flowchart of a method for assessing a vehicle usage status of a user according to one embodiment of the invention.

It should be pointed out that the following method of this embodiment may be implemented by an onboard apparatus, or implemented by a remote computer system outside the vehicle, or even implemented by the onboard apparatus and the remote computer system cooperatively. Exemplarily, the case where the method is implemented by the onboard apparatus is used as an example here.

It should be pointed out that the onboard apparatus here should be broadly understood as a computing device installed or loaded on the vehicle, including, but not limited to, a central control system of the vehicle, a mobile phone, a tablet computer, etc.

As shown in FIG. 1, in step 110, the onboard apparatus determines dimensions required for assessing a vehicle usage status of a user, each of the dimensions actually reflecting a feature category of the vehicle usage status. Theses feature categories for example include, but are not limited to, health care, use time, driving performance, familiarity, and interaction frequency. In this embodiment, the health care, use time, driving performance, familiarity, and interaction frequency are all used as the dimensions of the vehicle usage status, but this is not necessary. In actual application, one or more of the feature categories exemplified above may be used, or feature categories not exemplified here may also be used.

Then, the process proceeds to step 120, in which the values of the dimensions determined in step 110 are determined according to a vehicle usage history of the user. It should be pointed out that each vehicle may be used by multiple users (for example, multiple members of a family use one vehicle). Preferably, in this embodiment, a separate account is allocated to each user, and each account has a corresponding vehicle usage history. The following steps are all performed for a single user or account.

When multiple dimensions are considered, these dimensions may be determined by means of series calculation or parallel calculation. All these different manners fall within the spirit and essential scope of the invention. Exemplarily, as shown in FIG. 1, step 120 comprises multiple parallel branches, which will be described below in detail.

In step 121A, the onboard apparatus acquires a maintenance record, a repair record, and a fault record from a local storage device or a remote database.

Then, the process proceeds to step 122A, in which the onboard apparatus determines the value of the health care dimension according to the acquired records. Exemplarily, the value of the health care dimension may be calculated based on the following table:

Table 1

| Item | Completion status | Score |
|---|---|---|
| Maintenance | Maintenance is completed within a recommended time | +0.3 |
| | Maintenance is not completed within a recommended time | -0.1 |

(continued)

| Item | Completion status | Score |
|------|-------------------|-------|
| Repair | An order is placed within 48 hours for repair when a severe fault occurs | +0.1 |
| | No order is placed within 48 hours for repair when a severe fault occurs | -0.1 |
| | Repair is made in the official service center when a general fault occurs | +0.2 |
| | No repair is made in the official service center and the problem has been not resolved within two weeks, when a general fault occurs | -0.1 |
| | Repair, maintenance, and beauty items of other vehicles are made in the official service center | +0.2 |
| Daily traveling | No fault occurs to the vehicle in the current month | +0.3 |

It should be pointed out that the scores and the statistical period for a vehicle fault given in Table 1 are exemplary.

After step 122A is performed, the process proceeds to step 130.

In step 121B, the onboard apparatus acquires, from the local storage device or the remote database, a total traveling mileage and a daily traveling mileage of the vehicle and the number of times that the vehicle is used every week.

Then, the process proceeds to step 122B, in which the onboard apparatus determines the value of the use time dimension according to the data acquired in step 121B. Generally, the higher the frequency of use of the vehicle is, the greater the value is. In addition, for a long-distance trip, increasing the value may also be conceivable.

Exemplarily, the value of the use time dimension may be calculated based on:

the total traveling mileage: when the total traveling mileage < 100 km, the value is increased by 0.05 each time the total traveling mileage is increased by 1 km; when 100 km < the total traveling mileage < 1000 km, the value is increased by 0.05 each time the total traveling mileage is increased by 20 km; and when the total traveling mileage is greater than 1000 km, the value is increased by 0.05 each time the total traveling mileage is increased by 100 km.

The frequency of use of the vehicle every week: 0.1 is subtracted from the value if the vehicle is not used for three days or more in a week.

The daily traveling mileage: the value is increased by 0.2 if the daily traveling mileage > 300 km.

It should be pointed out that both the calculation rules and the statistical period for the frequency of use of the vehicle and the traveling mileage are only exemplary.

After step 122B is performed, the process proceeds to step 130.

In step 121C, the onboard apparatus acquires, from the local storage device or the remote database, data about a driving stationarity indicator and an energy consumption indicator for the user per unit traveling mileage.

Then, the process proceeds to step 122C, in which the onboard apparatus determines the value of the driving performance dimension according to the data acquired in step 121C. Exemplarily, the value of the driving performance dimension may be calculated based on:

$$V_C = \alpha_1 \times P_1 + \beta_1 \times P_2 \quad (1)$$

where $V_C$ is the value of the driving performance dimension, $P_1$ is the score of driving performance in this week, $P_2$ is the score of driving performance in last week, and $\alpha_1$ and $\beta_1$ are respectively weight values of $P_1$ and $P_2$.

Preferably, the score of driving performance in this week and the score of driving performance in last week are determined according to the following formulas:

$$P_i = 0.5 \times (T_{i1} + T_{i2}) \quad (2)$$

$$T_{i1} = (1 - N_i/L_i \times C) \times 10 \quad (3)$$

$$T_{i2} = Ca \times E_i + Cb \quad (4)$$

where the subscript i = 1 or 2 to represent an item in this week or last week, $T_{i1}$ is an driving stationarity indicator in this week or last week, $T_{i2}$ is an energy consumption indicator in this week or last week, $L_i$ is a traveling mileage of the vehicle in this week or last week, $N_i$ is the number of times of emergency acceleration and deceleration of the vehicle within the traveling mileage $L_i$, $E_i$ is the power consumption amount per unit traveling mileage in this week or last week, and C, Ca and Cb are constants which can be calibrated according to actual applications.

It should be pointed out that both the calculation rules and the statistical period for the driving performance scores are only exemplary.

After step 122C is performed, the process proceeds to step 130.

In step 121D, the onboard apparatus acquires, from the local storage device or the remote database, data about the frequency of operating of the onboard apparatus by the user per unit traveling mileage.

Then, the process proceeds to step 122D, in which the onboard apparatus determines the value of the familiarity dimension according to the acquired data about frequency. Exemplarily, the value of the familiarity dimension may be calculated based on the following table:

Table 2

| Item | Completion status | Score |
|---|---|---|
| Setting | Connecting to the Bluetooth of a mobile phone for the first time | +0.2 |
| Music | [Weekly statistics] hours of use of a music App in the current week/a total mileage in the week > 0.01 | +0.1 |
| | [Weekly statistics] hours of use of a music App in the current week/a total mileage in the week < 0.005 | -0.1 |
| Navigation | Setting a home location in the navigation | +0.2 |
| | Setting a company location in the navigation | +0.2 |
| | [Weekly statistics] the number of miles of use of onboard navigation in the current week/(the total number of miles in the week - the number of commute miles in the week) > 0.5 | +0.1 |
| | [Weekly statistics] the number of miles of use of onboard navigation in the current week/(the total number of miles in the week - the number of commute miles in the week) < 0.1 | -0.1 |

It should be pointed out that both the scores and the statistical period for the frequency of operating of the onboard apparatus given in Table 2 are only exemplary.

After step 122D is performed, the process proceeds to step 130.

In step 121E, the onboard apparatus acquires, from the local storage device or the remote database, data about the number of times that the user wakes up an onboard voice assistant per unit traveling mileage.

Then, the process proceeds to step 122E, in which the onboard apparatus determines the value of the interaction frequency dimension according to the data acquired in step 121E. Exemplarily, the value of the interaction frequency dimension may be calculated based on:

$$\mathbf{W_C} = \alpha_2 \times \mathbf{Q_1} + \beta_2 \times \mathbf{Q_2} \quad (5)$$

where $W_C$ is the value of the interaction frequency dimension, $Q_1$ is an interaction frequency in this week, $Q_2$ is an interaction frequency in last week, and $\alpha_1$ and $\beta_1$ are respectively weight values of $Q_1$ and $Q_2$.

Preferably, the interaction frequency in this week and the interaction frequency in last week are determined according to the following formula:

$$\mathbf{Q_i} = \mathbf{T_i} / \mathbf{L_i} \times \mathbf{B} \quad (6)$$

where the subscript i = 1 or 2 to represent an item in this week or last week, $L_i$ is a traveling mileage of the vehicle in this week or last week, $T_i$ is the number of times that the onboard voice assistant is waken up within the traveling mileage $L_i$, and B is a constant, which can be calibrated according to actual applications.

It should be pointed out that both the calculation rules and the statistical period for the interaction frequency are only exemplary.

After step 122E is performed, the process proceeds to step 130.

In step 130, the onboard apparatus obtains, based on the values of the dimensions, an assessed value reflecting the vehicle usage status of the user. Preferably, the onboard apparatus may determine, as the assessed value, a weighted sum of the values of the various dimensions determined in the steps above.

After step 130, preferably, the method flow shown in FIG. 1 proceeds to step 140, in which the onboard apparatus generates a vehicle usage advice associated with the user based on the assessed value determined in step 130. For example, if the value of the health care dimension is less than a preset threshold, the onboard apparatus will generate a usage advice that the frequency of maintenance of the vehicle should be increased; if the value of the use time dimension is less than a preset threshold, the onboard apparatus will generate an advice that the usage of the vehicle should be increased; if the value of the driving performance dimension is less than a preset threshold, the onboard apparatus will generate an advice that the driving habit should be improved; and if the value of the interaction frequency dimension is less than a preset threshold, the onboard apparatus will generate an advice that the number of times that a music APP or a navigation APP is used should be increased. In this embodiment, a customized threshold may be set for each user.

Then, the process proceeds to step 150, in which the onboard apparatus provides the generated vehicle usage advice to the user. Exemplarily, the usage advices such as maintenance of the vehicle, frequent use of a music APP and a navigation APP, and improvement of driving habits may be displayed by the display of the onboard apparatus in the manner of a video, a picture, text, or a combination thereof, or the corresponding vehicle usage advices are played to the user by the speaker of the onboard apparatus in the manner of a voice or a prompt tone. In addition, the vehicle usage advices may also be presented to the user simultaneously in visual and audio manners.

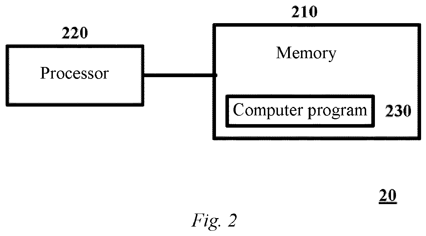

FIG. 2 is a schematic block diagram of an apparatus for assessing a vehicle usage status of a user according to a further embodiment of the invention.

The apparatus 20 shown in FIG. 2 comprises a memory 210, a processor 220, and a computer program 230 stored on the memory 210 and executable on the processor 220, wherein the computer program 230 can be executed to implement the method for identifying a parking space as described above by means of FIG. 1.

According to another aspect of the invention, further provided is a computer-readable storage medium having a computer program stored thereon, wherein the program can implement, when executed by a processor, the method for identifying a parking space as described above by means of FIG. 1.

The embodiments and examples proposed herein are provided to best describe the embodiments according to the technology and its specific application, and thereby enable a person skilled in the art to implement and use the invention. However, a person skilled in the art will appreciate that the foregoing descriptions and examples are provided only for convenience of description and illustration. The proposed description is not intended to cover all aspects of the invention or limit the invention to the disclosed precise forms.

In view of the above, the scope of the disclosure is defined by the following claims.

**Claims**

1. A method for assessing a vehicle usage status of a user, **characterized by** comprising the steps of:

   determining values of one or more dimensions for a vehicle usage status of a user according to a vehicle usage history of the user; and
   obtaining, based on the values of the dimensions, an assessed value reflecting the vehicle usage status of the user.

2. The method according to claim 1, wherein the dimensions comprise one or more of: health care, use time, driving performance, familiarity, and interaction frequency.

3. The method according to claim 2, wherein the value of the health care dimension is determined based on a maintenance record, a repair record, and a fault record of the vehicle.

4. The method according to claim 2, wherein the value of the use time dimension is determined based on a total traveling mileage and a daily traveling mileage of the vehicle and the number of times that the vehicle is used every week.

5. The method according to claim 2, wherein the value of the driving performance dimension is determined based on a driving stationarity indicator and an energy consumption indicator of the vehicle per unit traveling mileage.

6. The method according to claim 2, wherein the value of the familiarity dimension is determined based on the frequency of operating of an onboard device by the user per unit traveling mileage.

7. The method according to claim 2, wherein the value of the interaction frequency dimension is determined based on the number of times that a user wakes up an onboard voice assistant per unit traveling mileage.

8. The method according to claim 2, wherein the assessed value is a weighted sum of the values of the various dimensions.

9. The method according to claim 1, further comprising the steps of:

    generating a vehicle usage advice associated with the user based on the assessed value; and
    providing the generated vehicle usage advice to the user.

10. An apparatus for assessing a vehicle usage status of a user, comprising a memory, a processor, and a computer program stored on the memory and executable on the processor, **characterized in that** the program is executed to implement the method according to any of claims 1 to 8.

11. The apparatus for assessing a vehicle usage status of a user according to claim 10, further comprising a display, wherein the program is executed to further implement the steps of:

    generating a vehicle usage advice associated with the user based on the assessed value; and
    providing the generated vehicle usage advice to the user by means of the display.

12. A computer-readable storage medium having a computer program stored thereon, **characterized in that** the program implements, when executed by a processor, the method according to any of claims 1 to 9.

Fig. 1

**220**

Processor

**210**

Memory

Computer program | **230**

**20**

*Fig. 2*

## INTERNATIONAL SEARCH REPORT

| International application No. |
| --- |
| **PCT/CN2018/120639** |

**A.    CLASSIFICATION OF SUBJECT MATTER**

G07C 5/08(2006.01)i

According to International Patent Classification (IPC) or to both national classification and IPC

**B.    FIELDS SEARCHED**

Minimum documentation searched (classification system followed by classification symbols)

G07C

Documentation searched other than minimum documentation to the extent that such documents are included in the fields searched

Electronic data base consulted during the international search (name of data base and, where practicable, search terms used)

VEN; CNABS: 车, 保养, 健康, 建议, 评估, 时间, 里程, 历史, 故障, 平稳, 次数, 维修, consumption, automobile, vehicle, maintain, frequency, trouble, time, mile, servicing, maintenance, breakdown, fault, health, history, failure

**C.    DOCUMENTS CONSIDERED TO BE RELEVANT**

| Category* | Citation of document, with indication, where appropriate, of the relevant passages | Relevant to claim No. |
| --- | --- | --- |
| X | CN 102044095 A (SHENZHEN CASTEL SPACEINET COMMUNICATIONS CO., LTD.) 04 May 2011 (2011-05-04) description, paragraphs [0010]-[0077], and figures 1-3 | 1-12 |
| X | EP 2354992 A2 (HONEYWELL INT. INC.) 10 August 2011 (2011-08-10) description, paragraphs [0002]-[0099], and figures 1-9 | 1-12 |
| A | CN 103871122 A (SHENZHEN XTOOLTECH CO., LTD.) 18 June 2014 (2014-06-18) entire document | 1-12 |
| A | CN 104599346 A (TENCENT TECHNOLOGY SHENZHEN CO., LTD.) 06 May 2015 (2015-05-06) entire document | 1-12 |
| A | CN 102120441 A (ACTIA (CHINA) AUTOMOTIVE ELECTRONICS CO., LTD.) 13 July 2011 (2011-07-13) entire document | 1-12 |
| A | CN 104299289 A (JIAO, YAN) 21 January 2015 (2015-01-21) entire document | 1-12 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 February 2019** | **06 March 2019** |

| Name and mailing address of the ISA/CN | Authorized officer |
| --- | --- |
| State Intellectual Property Office of the P. R. China No. 6, Xitucheng Road, Jimenqiao Haidian District, Beijing 100088 China | |
| Facsimile No. **(86-10)62019451** | Telephone No. |

Form PCT/ISA/210 (second sheet) (January 2015)

**INTERNATIONAL SEARCH REPORT**

International application No.

**PCT/CN2018/120639**

**C. DOCUMENTS CONSIDERED TO BE RELEVANT**

| Category* | Citation of document, with indication, where appropriate, of the relevant passages | Relevant to claim No. |
|---|---|---|
| A | CN 105389863 A (JIANGSU NANYI DINA DIGITAL TECHNOLOGY DEVELOPMENT CO., LTD.) 09 March 2016 (2016-03-09) entire document | 1-12 |
| A | US 2016292937 A1 (GOGORO INC.) 06 October 2016 (2016-10-06) entire document | 1-12 |

Form PCT/ISA/210 (second sheet) (January 2015)

# EP 3 726 483 A1

<table>
<tr><td colspan="2"><b>INTERNATIONAL SEARCH REPORT</b><br>Information on patent family members</td><td colspan="2">International application No.<br><b>PCT/CN2018/120639</b></td></tr>
</table>

| Patent document cited in search report | | | Publication date (day/month/year) | Patent family member(s) | | | Publication date (day/month/year) |
|---|---|---|---|---|---|---|---|
| CN | 102044095 | A | 04 May 2011 | None | | | |
| EP | 2354992 | A2 | 10 August 2011 | EP | 2354992 | A3 | 04 July 2012 |
| | | | | US | 8090824 | B2 | 03 January 2012 |
| | | | | US | 2011154118 | A1 | 23 June 2011 |
| CN | 103871122 | A | 18 June 2014 | None | | | |
| CN | 104599346 | A | 06 May 2015 | CN | 104599346 | B | 27 April 2018 |
| CN | 102120441 | A | 13 July 2011 | WO | 2012094904 | A1 | 19 July 2012 |
| | | | | CN | 102120441 | B | 13 March 2013 |
| CN | 104299289 | A | 21 January 2015 | CN | 104299289 | B | 28 December 2016 |
| CN | 105389863 | A | 09 March 2016 | CN | 105389863 | B | 28 November 2017 |
| US | 2016292937 | A1 | 06 October 2016 | JP | 6446045 | B2 | 26 December 2018 |
| | | | | PH | 12016500857 | A1 | 27 June 2016 |
| | | | | EP | 3065977 | A1 | 14 September 2016 |
| | | | | EP | 3065977 | A4 | 01 November 2017 |
| | | | | TW | 201527158 | A | 16 July 2015 |
| | | | | JP | 2017501069 | A | 12 January 2017 |
| | | | | US | 9390566 | B2 | 12 July 2016 |
| | | | | PH | 12016500857 | B1 | 27 June 2016 |
| | | | | CN | 105873797 | A | 17 August 2016 |
| | | | | CN | 105873797 | B | 29 June 2018 |
| | | | | TW | I626183 | B | 11 June 2018 |
| | | | | WO | 2015070057 | A1 | 14 May 2015 |
| | | | | US | 2015134142 | A1 | 14 May 2015 |

Form PCT/ISA/210 (patent family annex) (January 2015)

12